# EUROPEAN PATENT SPECIFICATION

(11) **EP 2 219 295 B1**
(45) Date of publication and mention of the grant of the patent: **26.10.2011**
(21) Application number: 09152940.4
(22) Date of filing: 16.02.2009
(51) Int. Cl.: H04B 1/38, H04B 15/00

(54) **Mobile wireless communications device including a self-contained rechargeable battery pack with filter and related methods**
Mobile drahtlose Kommunikationsvorrichtung mit einem integrierten wiederaufladbaren Batteriepack mit Filter und zugehörige Verfahren
Dispositif de communications sans fil mobile incluant un bloc-batterie autonome rechargeable avec un filtre et procédés correspondants

(43) Date of publication of application: 18.08.2010
(73) Proprietor: RESEARCH IN MOTION LIMITED, Waterloo, Ontario N2L 3W8 (CA)
(72) Inventor: Zhu, Lizhong, Waterloo, Ontario N2L 3W8 (CA); Corrigan, Michael, Waterloo, Ontario N2L 3W8 (CA); Mankaruse, George, Waterloo, Ontario N2L 3W8 (CA)
(74) Representative: Phillips, Emily Elizabeth

(56) References cited:
- JP-A- 2002 100 893
- US-A- 5 814 969

## Description

### Field of the Invention

The present invention relates to the field of electronic devices, and, more particularly, to mobile wireless communications devices and related methods.

### Background of the Invention

Cellular communications systems continue to grow in popularity and have become an integral part of both personal and business communications. Cellular telephones allow users to place and receive voice calls most anywhere they travel. Moreover, as cellular telephone technology has increased, so too has the functionality of cellular devices. For example, many cellular devices now incorporate personal digital assistant (PDA) features such as calendars, address books, task lists, etc. Moreover, such multi-function devices may also allow users to wirelessly send and receive electronic mail (email) messages and access the Internet via a cellular network and/or a wireless local area net work (WLAN), for example.

Even so, as the functionality of cellular communications devices continues to increase, so too does the demand for smaller devices which are easier and more convenient for users to carry. Such size constraints may pose challenges for providing suitable rechargeable battery packs, which can not only provide adequate power but also desired battery life. Further developments in mobile electronic device battery packs may therefore be desirable to provide adequate power and performance in certain applications.
[0003a] JP-A-2002100893 discloses a thin electronic device for which a high-speed electronic component is arranged between a substrate and a thin battery disposed face to face with the substrate capable of suppressing the amplification of radiation noise due to electromagnetic waves radiated from the high-speed electronic component.
[0003b] The invention is set out in the claims.

FIG. 1 is a perspective view of a mobile wireless communications device including a self-contained rechargeable battery pack in accordance with one aspect.

FIG. 2 is a schematic block diagram illustrating the battery pack and wireless communications components of the device of FIG. 1.

FIG. 3 is a schematic diagram of a battery pack in accordance with the prior art.

FIG. 4 is a schematic diagram of a battery pack for use in the device of FIG. 1 in accordance with one exemplary embodiment.

FIG. 5 is a schematic block diagram illustrating exemplary components of a mobile wireless communications device for use with the present invention.

The present description is made with reference to the accompanying drawings, in which exemplary embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, a mobile wireless communications device is disclosed herein which may include a portable device housing, wireless communications circuitry carried by the portable device housing, and a self-contained rechargeable battery pack carried by the portable housing for powering the wireless communications circuitry. More particularly, the self-contained rechargeable battery pack may include a battery casing, at least one internal battery cell carried within the battery casing, internal battery circuitry carried within the battery casing, and at least one internal filter element carried within the battery casing and coupled to the internal battery circuitry.

The self-contained rechargeable battery pack may further include a battery connection interface carried by the battery casing and coupled to the internal battery circuitry. By way of example, the at least one internal filter element may include at least one of a capacitor and an inductor. Also, the at least one filter element may include at least one pair of series-connected filter elements defining a tap therebetween. Moreover, each series-connected filter element may include an inductor, and the battery pack may further include a capacitor connected between the tap and a voltage reference. By way of example, the at least one filter element may include at least one ferrite bead.

More particularly, the battery pack may include a power supply line and a ground line, and the at least one filter element may include respective filter elements coupled to each of the power supply line and the ground line. The battery pack may also include a battery temperature signal line, and the at least one filter element may include respective filter elements coupled to each of the battery temperature signal line and the ground line. Similarly, the battery pack may further include a battery identification signal line, and the at least one filter element may include respective filter elements coupled to each of the battery identification signal line and the ground line. By way of example, the at least one internal battery cell may include at least one lithium-ion battery cell.

A self-contained rechargeable battery pack for a mobile electronic device, such as the one described briefly above, and a related method for making a self-contained rechargeable battery pack are also provided. The method may include positioning at least one internal battery cell within a battery casing, positioning internal battery circuitry within the battery casing, and positioning at least one internal filter element within the battery casing and coupled to the internal battery circuitry.

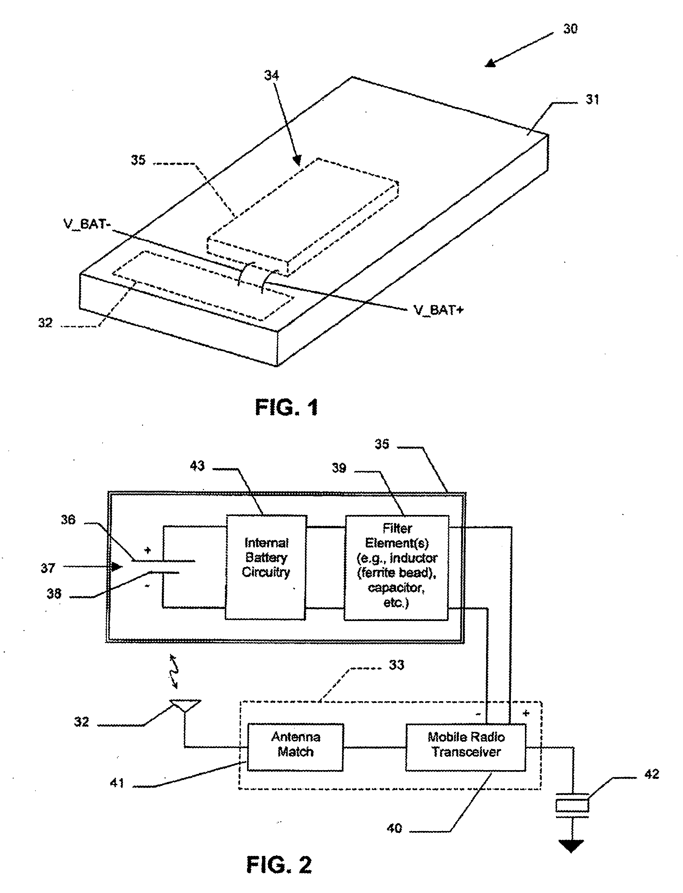

Referring initially to FIGS. 1 and 2, a mobile wireless communications device **30** illustratively includes a portable housing **31,** an antenna **32** carried by the housing, wireless communications circuitry **33** carried by the housing, and a self-contained rechargeable battery pack **34** also carried by the housing. In the illustrated example, the antenna **32** is an embedded or internal antenna carried within the portable housing **31**. It will be appreciated that multiple antennas as well as different types of antennas, such as external antennas, may be used as well in different embodiments. Moreover, in the illustrated example the wireless communications circuitry **33** includes a mobile radio transceiver **40** and antenna matching circuitry **41,** as will also be appreciated by those skilled in the art, although other configurations (e.g., without matching circuitry, etc.) may be used in different embodiments. Also, one or more clock reference circuits **42** (e.g., crystal oscillator) may also be included to provide a reference clock signal to the transceiver **40**.

By way of example, the device **30** may operate in accordance with various wireless communications formats, such as cellular, wireless LAN (e.g., 802.11x, Bluetooth, etc.), WiMAX, satellite, etc., as will be appreciated by those skilled in the art. In some embodiments, more than one such wireless communications format may be used in the same device (e.g., cellular, wireless LAN, and Bluetooth). Also, various types of mobile wireless communication devices **30** may be used, such as mobile phones, PDAs, laptop computers, wireless-enabled cameras, wireless-enabled media players, etc., for example, although in the present example a cellular device is illustrated, and the discussion provided herein will be with reference to a cellular device.

One difficulty with battery packs in wireless devices is that in some instances they may cause interference with the device antenna **32.** More specifically, radio frequency (RF) energy from the wireless communications circuitry **33** is coupled to the battery housing or casing **35** of the battery pack **34,** as illustrated in FIG. 2. This coupling may in turn cause various problems ranging from an audible buzzing noise to interference with data signal reception or transmission. Coupling may be particularly problematic with lithium ion battery packs, for example, which are commonly used for cellular phones and other mobile devices because of their relatively high electrochemical potential and relatively large energy density per weight.

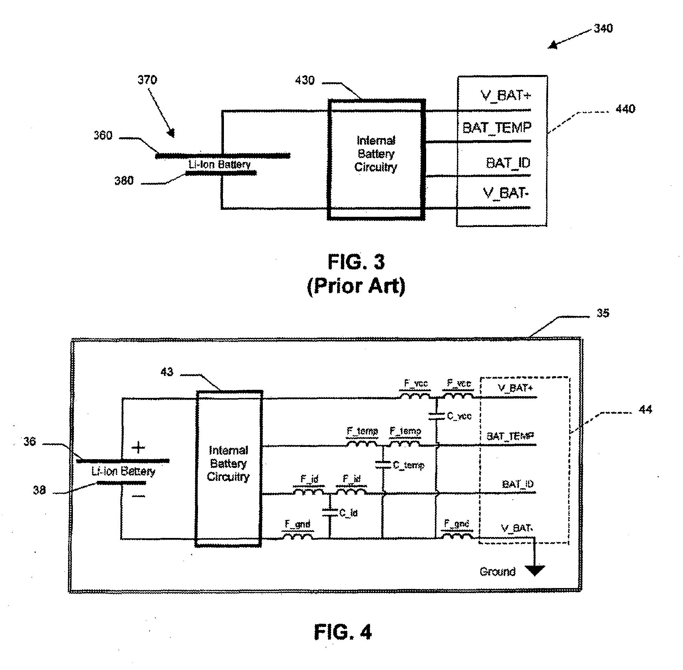

By way of background, reference is now made to a prior art lithium ion battery pack **340** shown in FIG. 3, which illustratively includes a lithium ion cell **370** with positive and negative electrodes **360, 380,** respectively, a battery connection interface **440** providing electrical connection or contact points between the battery and external components, and internal battery circuitry **430.** As will be appreciated by those skilled in the art, it is generally desirable to include protection circuitry in lithium ion battery packs to provide for safe operation. By way of example, the circuitry **430** may perform such functions as regulating peak voltage of the cell **370** during charging, and preventing the cell voltage from dropping too low when discharging. Additionally, maximum charge and discharge current may be regulated, and the cell **370** temperature may be monitored to avoid temperature extremes. Moreover, the circuitry **430** may also advantageously store identification information of the battery pack **340,** such as battery type, operational characteristics/ratings, serial numbers, etc. The circuitry **430** may communicate the operating/identification information to the device microprocessor by way of battery temperature and identification signal lines **BAT_TEMP, BAT_ID,** for example, although other signal lines could also be used.

In a typical lithium ion battery pack the casing **35** is metal, and a positive electrode **36** of the battery cell **37** is located outside of the casing. However, the negative electrode is located on the inside of the casing **35,** and this configuration makes it difficult to adequately ground the battery casing, such as to the ground plane of a device printed circuit board (PCB) upon which the wireless communications circuitry and other components are mounted, as will be appreciated by those skilled in the art, while the embodiments described herein are made with reference to a lithium ion battery for illustrational purposes, it should be noted that the techniques described herein may also advantageously be used with other types of batteries as well (e.g., NiCd, NiMH, etc.).

Referring additionally to FIG. 4, the battery pack configuration and methods described herein advantageously address the above-noted technical problem by providing enhanced filtering and grounding from within the battery casing **35**. One or more internal filter elements **39** (FIG. 2) are carried within the battery casing **35** and coupled to the internal battery circuitry. In the illustrated example, both capacitor and inductor filter elements are used. More particularly, connected between the **V-BAT+** power supply line connection point of the battery connection interface **44** and the positive electrode **36** is a pair of series-connected inductors (e.g., ferrite beads) **F_VCC** defining a tap therebetween. In addition, an RF. decoupling capacitor **C_VCC** is connected between the tap and a voltage reference, namely the **V_BAT-** line, which is in turn connected to a device ground (e.g., the PCB ground plane).

The inductors **F_VCC** and capacitor **C_VCC** therefore define a "T" shaped filter that provides filtering in two ways, namely (1) providing direct filtering of RP energy in the **V_BAT+** line, and (2) forcing received RF energy to ground, as will be discussed further below. Accordingly, the amount of RF energy received by the metal in the battery pack **34** that would otherwise proceed through the interface **44** to the wireless communications circuitry **33** and other electronic components of the device **30** is significantly reduced.

Ferrite beads provide a relatively low equivalent series resistance (ESR) to allow desired transient current to flow through the battery. For cellular device applications, for example, such currents may be relatively high, namely about 2.5-3.0 Amps. One exemplary ferrite bead which may be used is the chip ferrite bead BLM185 series from Murata Electronics N.A. Inc., although other suitable beads or inductors may also be used. The RF decoupling capacitor **C_VCC** may advantageously be selected to provide the low impedance, which advantageously helps to shunt the residual RF energy passing through the ferrite bead to ground. By way of example, for a GSM/GPRS/EDGE cellular device implementations, the RF decoupling capacitor may be selected with as low an ESR as possible and so that its series self-resonance is close to the middle of all the bands, as will be appreciated by those skilled in the art, although other selection values/criteria may also be used.

Similar T-shaped filter configurations are also illustratively used for the **BAT_TEMP** and **BAT_ID** signal lines. More particularly, the **BAT_TEMP** signal line filter includes series-connected inductors (e.g., ferrite beads) **F_temp** defining a tap therebetween, and a capacitor **C_temp** connected between the tap and the **V_BAT-** reference voltage line. Similarly, the **BAT_ID** signal line filter includes series-connected inductors (e.g., ferrite beads) **F_id** defining a tap therebetween, and a capacitor **C_id** connected between the tap and the **V_BAT-** reference voltage line. Moreover, the **V_BAT-** line also illustratively includes a pair of series-connected inductors (e.g., ferrite beads) **F_gnd** defining a tap therebetween to advantageously filter the RF energy that is passed to the device 30 signal ground, and the **C_id, C_temp,** and **C_VCC** capacitors are illustratively connected to the **V_BAT-** line at this tap, as shown. Exemplary part numbers and values of ferrite beads and capacitors used in a GSM cellular phone implementation are BLM15HG102SN1 (0402 size of 1000Ohm @ 1GHz) and GRM1555C1H330JZ01 (0402 size of 33pF), respectively, although other values may be used in different embodiments.

It will be appreciated that in some embodiments all of the above-described exemplary filter elements need not be used, and that filters need not be provided on each of these power/signal lines. That is, more or less filter elements may be used depending upon the particular application, frequencies used, the amount of coupling experienced, the battery type, etc., as will be appreciated by those skilled in the art.

The above-described filter arrangement thereby addresses such technical problems as (1) audible buzz (e.g., in Global System for Mobile communications (GSM) implementations) due to the coupling of transmitter RF energy from the embedded antenna **32** inside the device **30** to the battery metal casing **35;** (2) RF receiver de-sense due to digital noise and RF spurious energy radiated by the battery via the battery supply lines **V_BAT+,** V_BAT- and pickup by the antenna **32** in receive mode; and (3) degradation of the antenna performance due to RF coupling with the battery which represents low impedance to the antenna.

More particularly, by positioning (i.e., embedding) the electromagnetic compatibility (EMC)/electromagnetic interference (EMI) filter array in the battery casing **35** as illustrated in FIG. 4 (i.e., similar to the internal battery circuitry **43**), this advantageously helps to block the RF energy picked up by the battery from the antenna **32** during the transmit mode and prevent this energy from coupling onto the power supply lines, and also reduce the emitted digital noise and RF spurious energy from the various sources on the PCB (e.g., LCD, camera circuitry, harmonics from clock circuitry **42,** etc.) to prevent the noise/spurious coupling onto the battery. This is significant because the battery pack **34** could thereby behave like an antenna and radiate such noise, which could be picked up by the RF antenna in the receiver mode and thus cause receiver de-sense. The filter arrangement may also advantageously improve antenna performance in comparison with the conventional mobile battery as shown in FIG. 3 (e.g., by 10 to 30 dB) by providing higher RF impedance on the battery interface lines, as will be appreciated by those skilled in the art. Such performance gains are likely not possible by filtering components positioned outside of the battery housing, as excessive spurious noise may still get into the power supply lines.

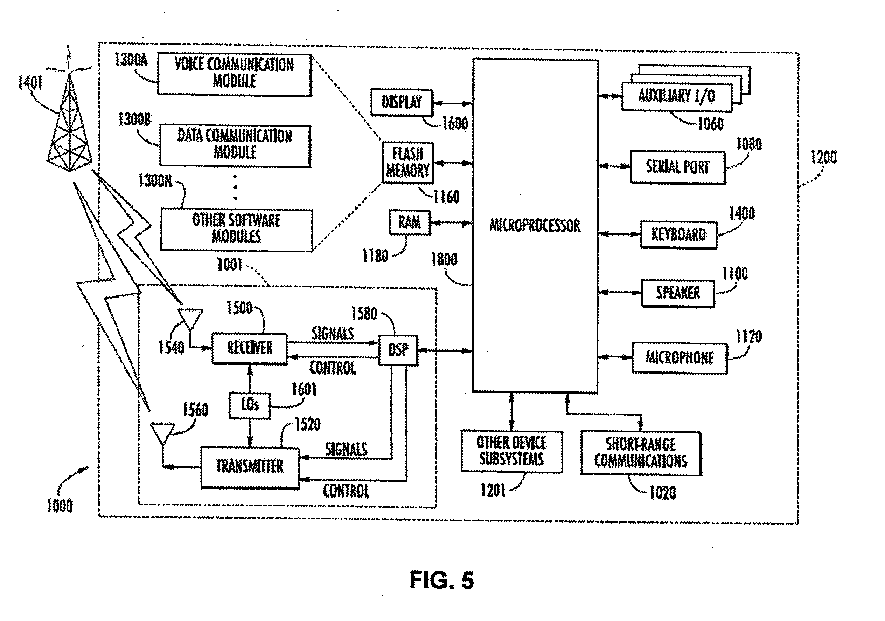

Further exemplary components that may be used in the device **30** are now further described with reference to a mobile wireless communications device **1000** shown in FIG. 5. The device **1000** illustratively includes a housing **1200,** a keypad **1400** and an output device **1600.** The output device shown is a display **1600,** which is preferably a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user.

The housing **1200** may be elongated vertically, or may take oh other sizes and shapes (including clamshell housing structure). The keypad may include a mode selection key, or other hardware or software for switching between text entry and telephony entry.

In addition to the processing device **1800,** other parts of the mobile device **1000** are shown schematically in FIG. 5. These include a communications subsystem **1001;** a short-range communications subsystem **1020;** the keypad 1400 and the display **1600,** along with other input/output devices **1060, 1080, 1100** and **1120**; as well as memory devices **1160, 1180** and various other device subsystems **1201**. The mobile device **1000** is preferably a two-way RF communications device having voice and data communications capabilities. In addition, the mobile device **1000** preferably has the capability to communicate with other computer systems via the Internet.

Operating system software executed by the processing device **1800** is preferably stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device 1000. A predetermined set of applications that control basic device operations, such as data and voice communications **1300A** and **1300B,** may be installed on the device **1000** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **1401.** Preferably, the PIM data items are seamlessly integrated, synchronized and updated via the wireless network **1401** with the device user's corresponding data items stored or associated with a host computer system.

Communication functions, including data and voice communications, are performed through the communications subsystem **1001**, and possibly through the short-range communications subsystem. The communications subsystem **1001** includes a receiver **1500,** a transmitter **1520**, and one or more antennas **1540** and **1560.** In addition, the communications subsystem **1001** also includes a processing module, such as a digital signal processor (DSP) **1580**, and local oscillators (LOs) **1601**. The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **1000** may send and receive communications signals over the communication network **1401**. Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580**.

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120,** Alternative voice or audio I/O subsystems, such as a voice message recording subsystem, may also be implemented on the device **1000.** In addition, the display **1600** may also be utilized in voice communication mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications device (30) comprising a portable device housing (31), wireless communications circuitry (33) carried by said portable device housing, and a self-contained rechargeable battery pack (34) carried by said portable housing for powering said wireless communications circuitry and comprising a battery casing (35), at least one internal battery cell (37) carried within said battery casing, a battery connection interface (44) carried by said battery casing and having a power supply line connection point, and internal battery circuitry (43) carried within said battery casing, and **characterized in that** the self-contained rechargeable battery pack further comprises:
at least one internal filter element (39) carried within said battery casing and connected between the power supply line connection point and said at least one internal battery cell.

2. The mobile wireless communications device (30) of Claim 1 wherein said at least one internal filter element (39) comprises at least one of a capacitor and an inductor.

3. The mobile wireless communications device (30) of Claim 1 wherein said at least one filter element comprises at least one pair of series-connected filter elements defining a tap therebetween.

4. The mobile wireless communications device (30) of Claim wherein each series-connected filter element comprises an inductor; and further comprising a capacitor connected between the tap and a voltage reference.

5. The mobile wireless communications device (30) of Claim 1 wherein said at least one filter element comprises at least one ferrite bead.

6. The mobile wireless communications device (30) of Claim 1 wherein said battery connection interface (44) further has a ground connection point; and wherein said at least one filter element comprises respective filter elements connected between the power supply line connection point and the at least one internal battery cell, and between the ground connection point and the at least one internal battery cell.

7. The mobile wireless communications device (30) of Claim 1 wherein said internal battery circuitry (43) further comprises a battery temperature signal line and a ground line; and wherein said at least one filter element further comprises respective filter elements coupled to each of said battery temperature signal line and said ground line.

8. The mobile wireless communications device (30) of Claim 1 wherein said internal battery circuitry (43) further comprises a battery identification signal line and a ground line; and wherein said at least one filter element further comprises respective filter elements coupled to each of said battery identification signal line and said ground line.

9. The mobile wireless communications device (30) of Claim 1 wherein said at least one internal battery cell (37) comprises at least one lithium-ion battery cell.

10. A method for making a self-contained rechargeable battery pack (34) for a mobile electronic device comprising positioning at least one internal battery cell (37) within a battery casing (35), positioning a battery connection interface (44) within the battery casing and having a power supply line connection point, and positioning internal battery circuitry (43) within the battery casing, **characterized in that** the method further comprises:
positioning at least one internal filter element (39) within the battery casing and connected between the power supply line connection point and the at least one internal battery cell.

11. The method of Claim 10 wherein the at least one internal filter element (39) comprises at least one of a capacitor and an inductor.

12. The method of Claim 10 wherein the at least one filter element comprises at least one pair of series-connected filter elements defining a tap therebetween.

13. The method of Claim 12 wherein each series-connected filter element comprises an inductor; and further comprising connecting a capacitor between the tap and a voltage reference.

## Patentansprüche

1. Mobile Drahtloskommunikationsvorrichtung (30), die eine tragbare Vorrichtungshülle (31),
eine Drahtloskommunikationsschaltung (33), die von der tragbaren Vorrichtungshülle aufgenommen ist, und
einen selbständigen Akkumulator (34) aufweist, der von der tragbaren Hülle zum Versorgen der Drahtloskommunikationsschaltung mit Energie aufgenommen ist und der
ein Batteriegehäuse (35),
mindestens eine interne Batteriezelle (37), die im Batteriegehäuse aufgenommen ist,
eine Batterieanschlussschnittstelle (44), die vom Batteriegehäuse aufgenommen ist und einen Stromzuführungsanschlusspunkt aufweist, und
eine interne Batterieschaltung (43) aufweist, die im Batteriegehäuse aufgenommen ist, und **dadurch gekennzeichnet ist, dass** der selbständige Akkumulator ferner Folgendes aufweist:
mindestens ein internes Filterelement (39), das im Batteriegehäuse aufgenommen ist und zwischen dem Stromzuführungsanschlusspunkt und der mindestens einen internen Batteriezelle verbunden ist.

2. Mobile Drahtloskommunikationsvorrichtung (30) nach Anspruch 1, wobei das mindestens eine interne Filterelement (39) mindestens einen Kondensator und/oder eine Spule aufweist.

3. Mobile Drahtloskommunikationsvorrichtung (30) nach Anspruch 1, wobei das mindestens eine Filterelement mindestens ein Paar an seriell verbundenen Filterelementen aufweist, die einen Abzweigpunkt dazwischen festlegen.

4. Mobile Drahtloskommunikationsvorrichtung (30) nach Anspruch 3, wobei jedes seriell verbundene Filterelement eine Spule aufweist, und ferner einen Kondensator aufweist, der zwischen dem Abzweigpunkt und einer Spannungsreferenz verbunden ist.

5. Mobile Drahtloskommunikationsvorrichtung (30) nach Anspruch 1, wobei das mindestens eine Filterelement mindestens einen Ferritkern aufweist.

6. Mobile Drahtloskommunikationsvorrichtung (30) nach Anspruch 1, wobei die Batterieanschlussschnittstelle (44) ferner einen Masseanschlusspunkt aufweist und wobei das mindestens eine Filterelement jeweilige Filterelemente aufweist, die zwischen dem Stromzuführungsverbindungpunkt und der mindestens einen internen Batteriezelle verbunden sind.

7. Mobile Drahtloskommunikationsvorrichtung (30) nach Anspruch 1, wobei die interne Batterieschaltung (43) ferner eine Batterietemperatursignallinie und eine Grundlinie aufweist und wobei das mindestens eine Filterelement ferner jeweilige Filterelemente aufweist, die sowohl mit der Batterietemperatursignallinie als auch mit der Grundlinie gekoppelt sind.

8. Mobile Drahtloskommunikationsvorrichtung (30) nach Anspruch 1, wobei die interne Batterieschaltung (43) ferner eine Batterieidentifiziersignallinie und eine Grundlinie aufweist, und wobei das mindestens eine Filterelement ferner jeweilige Filterelemente aufweist, die sowohl mit der Batterieidentifiziersignallinie als auch der Grundlinie gekoppelt sind.

9. Mobile Drahtloskommunikationsvorrichtung (30) nach Anspruch 1, wobei die mindestens eine interne Batteriezelle (37) mindestens eine Lithiumionen-Batteriezelle aufweist.

10. Verfahren zum Herstellen eines selbständigen Akkumulators (34) für eine mobile Elektronikvorrichtung mit Positionieren mindestens einer internen Batteriezelle (37) in einem Batteriegehäuse (35), Positionieren einer Batterieanschlussschnittstelle (44) im Batteriegehäuse und Aufweisen eines Stromzuführungsanschlusspunktes und Positionieren der internen Batterieschaltung (43) im Batteriegehäuse, **dadurch gekennzeichnet dass** das Verfahren ferner Folgendes aufweist:
Positionieren mindestens eines internen Filterelements (39) im Batteriegehäuse und verbunden zwischen dem Stromzuführungsanschlusspunkt und der mindestens einen internen Batteriezelle.

11. Verfahren nach Anspruch 10, wobei das mindestens eine interne Filterelement (39) mindestens einen Kondensator und/oder eine Spule aufweist.

12. Verfahren nach Anspruch 10, wobei das mindestens eine Filterelement mindestens ein Paar an seriell verbundenen Filterelementen aufweist, die einen Abzweigpunkt dazwischen festlegen.

13. Verfahren nach Anspruch 12, wobei jedes seriell verbundene Filterelement eine Spule aufweist, ferner mit Verbinden eines Kondensators zwischen dem Abzweigpunkt und einer Spannungsreferenz.

## Revendications

1. Dispositif (30) de communications sans fil mobile comprenant un logement (31) de dispositif portable, un ensemble de circuits (33) de communication sans fil soutenu par ledit logement de dispositif portable, et un bloc batterie (34) rechargeable autonome porté par ledit logement portable pour alimenter ledit ensemble de circuits de communications sans fil et comprenant un boîtier de batterie (35), au moins une cellule (37) de batterie interne portée dans ledit boîtier de batterie, une interface (44) de connexion de batterie portée par ledit boîtier de batterie et comprenant un point de raccordement d'une ligne d'alimentation électrique, et un ensemble de circuits (43) de batterie interne porté dans ledit boîtier de batterie, et **caractérisé en ce que** le bloc batterie rechargeable autonome comprend en outre :
au moins un élément filtre (39) interne porté dans ledit boîtier de batterie et relié entre le point de raccordement de la ligne d'alimentation électrique et ladite au moins une cellule de batterie interne.

2. Dispositif (30) de communications sans fil mobile de la revendication 1, dans lequel ledit au moins un élément filtre (39) interne comprend au moins l'un parmi un condensateur et un inducteur.

3. Dispositif (30) de communications sans fil mobile de la revendication 1, dans lequel ledit au moins un élément filtre comporte au moins une paire d'éléments filtres reliés en série définissant une prise entre eux.

4. Dispositif (30) de communications sans fil mobile de la revendication 3, dans lequel chaque élément filtre relié en série comprend un inducteur ; et comprenant en outre un condensateur relié entre la prise et une référence de tension.

5. Dispositif (30) de communications sans fil mobile de la revendication 1, dans lequel ledit au moins un élément filtre comprend au moins une perle de ferrite.

6. Dispositif (30) de communications sans fil mobile de la revendication 1, dans lequel ladite interface de connexion (44) de batterie comprend en outre un point de raccordement à la terre ; et dans lequel ledit au moins un élément filtre comporte des éléments filtres respectifs reliés entre le point de raccordement de la ligne d'alimentation électrique et l'au moins une cellule de batterie interne, et entre le point de raccordement à la terre et l'au moins une cellule de batterie interne.

7. Dispositif (30) de communications sans fil mobile de la revendication 1 dans lequel ledit ensemble de circuits (43) de batterie interne comprend en outre une ligne de signalisation de la température de la batterie et une ligne de terre ; et dans lequel ledit moins un élément filtre comprend en outre des éléments filtres respectifs couplés à chacune desdites ligne de signalisation de la température de la batterie et de ladite ligne de terre.

8. Dispositif (30) de communications sans fil mobile de la revendication 1, dans lequel ledit ensemble de circuits (43) de batterie interne comprend en outre une ligne de signalisation d'identification de la batterie et une ligne de terre, et dans lequel ledit au moins un élément filtre comporte en outre des éléments filtres respectifs couplés à chacune de ladite ligne de signalisation d'identification de la batterie et de ladite ligne de terre.

9. Dispositif de communication sans fil mobile (30) de la revendication 1, dans lequel ladite au moins une cellule (37) de batterie interne comprend au moins une cellule de batterie au lithium-ion.

10. Procédé de fabrication d'un bloc batterie (34) rechargeable autonome pour un appareil électronique mobile comprenant le fait de positionner au moins une cellule (37) de batterie interne dans un boîtier de batterie (35), de positionner une interface de connexion (44) de batterie dans le boîtier de batterie et comprenant un point de raccordement d'une ligne d'alimentation électrique, et de positionner un ensemble de circuits (43) de batterie interne dans le boîtier de batterie, **caractérisé en ce que** le procédé comprend en outre le fait :
de positionner au moins un élément filtre (39) interne dans le boîtier de batterie et qui est relié entre le point de raccordement de la ligne d'alimentation électrique et l'au moins une cellule de batterie interne.

11. Procédé de la revendication 10, dans lequel l'au moins un élément filtre (39) interne comprend au moins un condensateur et un inducteur.

12. Procédé de la revendication 10, dans lequel l'au moins un élément filtre comporte au moins une paire d'éléments filtres reliés en série définissant une prise entre eux.

13. Procédé de la revendication 12, dans lequel chaque élément filtre relié en série comprend un inducteur ; et comprenant en outre le fait de relier un condensateur entre la prise et une référence de tension.
